# DEMANDE DE BREVET EUROPEEN

(11) **EP 1 762 766 A2**
(43) Date de publication de la demande: **14.03.2007**
(21) Numéro de dépôt: 06358013.8
(22) Date de dépôt: 28.07.2006
(51) Int. Cl.: F16L 3/137

(54) **Collier de serrage pour gaine de protection de joints articulés et tous types de tuyaux souples et rigides**

(30) Priorité: 13.09.2005 FR 0509350
(71) Demandeur: Mecatech (SA), 1364 Luxembourg (LU)
(72) Inventeur: Mersch Patrick, 1364 Luxembourg (LU)
(74) Mandataire: Roman, Michel

(57) **Abrégé**

La présente invention a pour objet un collier de serrage pour gaines de protection de joints articulés et tous types de tuyaux souples et durits.

Ce collier, pourvu d'un élément déformable (15) pour le serrage, comporte, d'un côté, des crampons (14) matricés et recourbés dirigés vers l'intérieur et agencés pour s'insérer dans des trous (12) disposés de l'autre côté, ledit collier étant constitué d'une bande (11) avec nervure (16) creuse axiale longitudinale à concavité dirigée vers l'intérieur, déterminée pour empêcher les crampons d'entrer en contact avec le caoutchouc de la gaine tout en assurant le guidage de la partie libre de la bande en l'empêchant de s'échapper latéralement.

L'invention se rapporte d'une manière générale à la fabrication et à la diffusion d'équipements et d'accessoires mécaniques destinés en particulier au secteur de la réparation et de la maintenance des véhicules automobiles de tous types.

## Description

La présente invention a pour objet un collier de serrage pour gaines de protection de joints articulés et tous types de tuyaux souples et durits.

Elle se rapporte d'une manière générale à la fabrication et à la diffusion d'équipements et d'accessoires mécaniques destinés en particulier au secteur de la réparation et de la maintenance des véhicules automobiles de tous types.

Les gaines de protection sont surtout utilisées pour la protection des joints lubrifiés de type cardan, homocinétiques, tripodes, à billes, à rotule ou similaires utilisés pour transmettre un mouvement à des organes mobiles.

Ces gaines servent, d'une part, à protéger les articulations contre les corps étrangers, les chocs et autres éléments extérieurs et, d'autre part, à contenir de manière étanche la masse lubrifiante dont l'articulation a besoin pour durer. Elles sont le plus souvent constitués d'un élément tubulaire conique en caoutchouc ou élastomère souple, habituellement moulé en une seule pièce, formé d'une partie centrale avec ondulations permettant la flexion et l'extension axiale du corps, et de deux extrémités comportant l'une et l'autre des zones cylindriques de fixations incorporant des gorges destinées à recevoir des dispositifs de serrage assurant l'étanchéité de l'ensemble.

Dans le domaine de la maintenance les gaines sont de plus en plus fréquemment remplacées par des pièces de rechange à mise en place rapide.

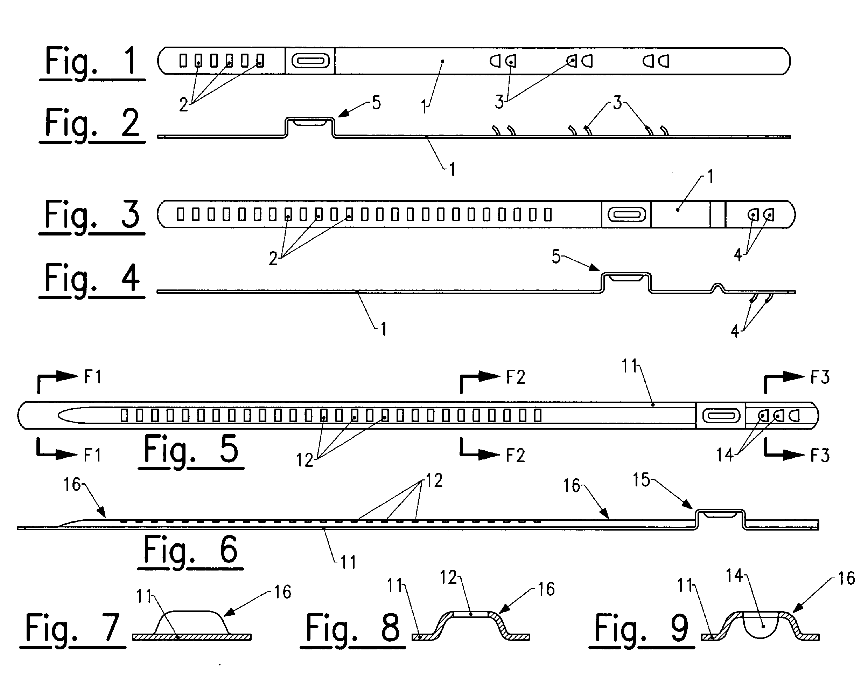

Les colliers de serrage de ce type connus à ce jour sont formés d'une bande plate 1 en acier comportant d'un côté des trous 2 répartis sur une partie de la longueur de la bande et, de l'autre côté, des crampons 3, 4 agencés pour s'insérer dans les trous 2. Ces crampons sont matricés et recourbés de façon à demeurer en position une fois introduits dans les trous après mise en place du collier dans la gorge cylindrique de la gaine de protection. Le serrage du collier s'effectue très rapidement en agissant au moyen d'une pince sur un élément déformable 5 prévu à cet effet le long de la bande 1 (figures 1 à 4).

Ces dispositifs se présentent sous deux formes :
- Les colliers dont les crampons 3 sont dirigés vers. Il comportent une extrémité libre 6 destinée à se loger au-dessous de l'élément déformable 5 pour éviter que celui-ci ne morde le caoutchouc de la gaine (figures 1 et 2). Toutefois, cette extrémité a tendance à s'échapper latéralement obligeant parfois à recommencer l'opération de mise en place, ce qui détruit d'ailleurs le collier..
- Les colliers à crampons 4 dirigés vers l'intérieur (figures 3 et 4). Montés au diamètre maximum, ils présentent un risque de poinçonnement du caoutchouc sous l'élément déformable. Montés sur des petits diamètres, leur extrémité libre doit être coupée, surtout sur des pièces en rotation.

Les deux types de colliers existants ne sont adaptables que sur une très petite gamme de diamètres, ce qui nécessite le stockage de nombreux modèles pour pouvoir assurer la maintenance de toutes les gaines de protection.

La présente invention a pour objectif de remédier à ces inconvénients. Il est en effet, de par sa conception, adaptable sur une grande fourchette de diamètres, ce qui est particulièrement intéressant dans le cas des articles de remplacement.

Les crampons ne risquent en aucun cas de blesser le caoutchouc de la gaine et il n'est pas nécessaire de couper le bout libre, comme c'est parfois le cas avec les colliers existants.

Le dispositif selon l'invention est constitué d'un collier à serrage rapide formé d'une bande pourvue d'un élément déformable pour le serrage, ainsi que de trous et de crampons matricés et recourbés, dirigés vers l'intérieur et agencés pour s'insérer dans lesdits trous, la bande comportant une nervure creuse axiale longitudinale à concavité dirigée vers l'intérieur, empêchant les crampons d'endommager le caoutchouc de la gaine tout en assurant le guidage de la partie libre de la bande en l'empêchant de s'échapper latéralement.

Sur les dessins annexés, donnés à titre d'exemple non limitatif d'une forme de réalisation conforme à la présente demande :
les figures 1 et 2, déjà mentionnées, représentent, vu respectivement de dessus et de côté, un collier de serrage de type connu déployé, avec dents vers l'extérieur,
les figures 3 et 4 montrent dans les mêmes conditions un collier de serrage de type connu avec dents vers l'intérieur,
la figure 5 est une vue de dessus d'un collier de serrage conforme à la présente invention,
la figure 6 est une vue de côté du collier de la figure précédente
et les figures 7, 8 et 9 sont des coupes transversales respectivement suivant les flèches F1, F2 et F3 de la figure 5.

Le dispositif, figures 1 à 9, est constitué, comme les colliers existants, d'une bande 11 en acier inoxydable comportant d'un côté des trous 12 répartis sur une partie de la longueur et, de l'autre côté, des crampons 14 matricés et recourbés agencés pour s'insérer dans ces trous et rester en position après mise en place du collier.

Les crampons 14 sont dirigés vers l'intérieur.

La bande 11, pourvue d'un élément déformable 15 de serrage, est remarquable en ce que sa partie médiane est déformée longitudinalement de façon à former une nervure 16 creuse axiale longitudinale à concavité dirigée vers l'intérieur.

Les trous 12 sont disposés au sommet de cette nervure, ce qui écarte les crampons 14 et les empêche d'entrer en contact avec le caoutchouc de la gaine.

La forme de la nervure 16 est déterminée de façon à ce que, lorsque deux parties de la bande sont superposées, les tronçons de nervure correspondants s'emboîtent l'un dans l'autre, ce qui assure le guidage de la partie libre de la bande et l'empêche de s'échapper latéralement tout en facilitant sa mise en place.

L'extrémité de la partie de la bande comportant les trous 12 est dépourvue de perforations sur une certaine longueur déterminée de façon à ce que, même en position diamètre maximum, il y aie toujours une portion de bande entre l'élément déformable 15 et la gaine.

Les bords de la bande 11 seront ébavurés, non tranchants, sur les quatre angles extérieurs.

Le positionnement des divers éléments constitutifs donne à l'objet de l'invention un maximum d'effets utiles qui n'avaient pas été, à ce jour, obtenus par des dispositifs similaires.

## Revendications

1. °. Collier de serrage pour gaines de protection de joints articulés et tous types de tuyaux souples et durits, destiné en particulier au secteur de la réparation et de la maintenance des véhicules automobiles de tous types, formé d'une bande (11) pourvue d'un élément déformable (15) pour le serrage, ladite bande comportant d'un côté des trous (12) répartis sur une partie de la longueur et, de l'autre côté, des crampons (14) matricés et recourbés, dirigés vers l'intérieur et agencés pour s'insérer dans lesdits trous,
**caractérisé en ce que** la bande (11) comporte une nervure (16) creuse axiale longitudinale à concavité dirigée vers l'intérieur, déterminée pour empêcher les crampons (14) d'entrer en contact avec le caoutchouc de la gaine tout en assurant le guidage de la partie libre de la bande en l'empêchant de s'échapper latéralement.

2. °. Collier de serrage selon la revendication 1, **se caractérisant par le fait que** la forme de la nervure (16) est déterminée de façon à ce que, lorsque deux parties de la bande sont superposées, les tronçons de nervure correspondants s'emboîtent l'un dans l'autre.

3. °. Collier de serrage selon l'une quelconque des revendications précédentes, **se caractérisant par le fait que** les trous (12) sont disposés au sommet de la nervure (16).

4. °. Collier de serrage selon l'une quelconque des revendications précédentes, **se caractérisant par le fait que** l'extrémité de la partie de la bande (11) comportant les trous (12) est dépourvue de perforations sur une certaine longueur déterminée de façon à ce que, même en position diamètre maximum, il y aie toujours une portion de bande entre l'élément déformable (15) et la gaine.

5. °. Collier de serrage selon l'une quelconque des revendications précédentes, **se caractérisant par le fait que** les bords de la bande (11) sont ébavurés, non tranchants, sur les quatre angles extérieurs.

6. °. Collier de serrage selon l'une quelconque des revendications précédentes, **se caractérisant par le fait que** la bande (11) est en acier inoxydable.
